# EUROPEAN PATENT SPECIFICATION

(11) **EP 3 569 296 B1**
(45) Date of publication and mention of the grant of the patent: **21.09.2022**
(21) Application number: 18738496.1
(22) Date of filing: 10.01.2018
(51) Int. Cl.: B01D 1/26, A23J 1/06, A23K 10/24, B01D 1/00, B01D 1/22, B01D 1/24, B01D 5/00, F26B 5/04, F26B 25/04, B01D 3/10, A23J 3/12

(54) **DEVICE AND METHOD FOR OBTAINING A DESICCATED PRODUCT FROM BLOOD OR BLOOD DERIVATIVES**
VORRICHTUNG UND VERFAHREN ZUR GEWINNUNG EINES GETROCKNETEN PRODUKTS AUS BLUT ODER BLUTDERIVATEN
DISPOSITIF ET PROCÉDÉ D'OBTENTION D'UN PRODUIT DÉSHYDRATÉ À PARTIR DE SANG OU DE SES DÉRIVÉS

(30) Priority: 11.01.2017 ES 201730019
(43) Date of publication of application: 20.11.2019
(73) Proprietor: Universidade De Santiago De Compostela, 15782 Santiago de Compostela (ES)
(72) Inventor: MAGIDE AMEIJIDE, José Manuel, 15782 Santiago de Compostela (ES); VARELA RODRÍGUEZ, Hiram, 15782 Santiago de Compostela (ES)
(74) Representative: Balder IP Law, S.L.
(86) International application number: PCT/ES2018/070017
(87) International publication number: WO 2018/130736

(56) References cited:
- EP-A1- 0 628 331
- WO-A2-2010/097060
- CN-U- 203 985 914
- DE-A1- 2 849 862
- DE-C- 181 965
- US-A- 3 764 483
- US-A- 4 386 161
- US-A- 5 409 576

## Description

### TECHNICAL FIELD OF THE INVENTION

The present invention relates to a device and method for processing byproducts and/or waste from the food industry, more specifically it addresses the production of a desiccated product from liquid blood or derivatives.

### STATE OF THE ART

The blood generated in meat industries, such as slaughterhouses, constitutes contaminating liquid waste. The moisture content thereof is usually around 80% on a wet basis. Usually the management thereof is reduced to simple incineration by a waste manager. However, the solid fraction of the blood has many components of high value on the market. Notable among them is lysine, an essential amino acid for the diet of many animals, which is widely used in the formulation of feed. One way of obtaining these components comprises eliminating water from the blood to form the so-called blood meal, which usually has a moisture content of around 8-12% on a dry basis. Once the meal is made, the blood ceases to be the original contaminating waste, and it can be stored, packed and distributed easily.

The drying of the blood is an energetically costly process when taking into account that evaporating one litre of water requires around 550 Kcal. One technology that significantly reduces the energy cost of eliminating water are multiple-effect evaporators. The terms used as synonyms throughout the document are the following: "system of multiple-effect evaporators", "system of evaporators" and "multiple-effect evaporators". Saving occurs when the aqueous product to be treated evaporates in successive steps, each of which is powered by the energy provided by the condensation heat of the vapour generated in the previous step. The energy saving is proportional to the number of evaporators: the greater the number of evaporators, the lower the cost. At the same time, systems of evaporators usually work in a vacuum, which ensures boiling temperatures below 100°C. In the case of blood this is a great advantage, since high temperatures denature the proteins thereof, and this means there is a fall in the value of the meal on the market. The two reasons stated herein, vapour reuse and low temperature, make the energy cost one of the lowest and the quality of the product high. For this reason, the inclusion of multiple-effect evaporators to remove water from the blood has always been advantageous in the state of the art.

However, multiple-effect evaporators present problems when handling high-viscosity products, as is the case of blood for certain moisture contents. In addition, the phenomenon of blood coagulation further complicates the management thereof by means of systems of evaporators. To avoid these problems, in the current art evaporators do not completely dry the blood until it is made into meal, but rather they simply concentrate it to a certain moisture content. This content must be such that it allows the blood to maintain a low viscosity. For example, it is typical for a system of multiple-effect evaporators to concentrate the blood to 60-70% moisture on a wet basis. With this moisture content the blood continues to flow easily, such that it enables the evaporators to operate correctly. Once the blood is concentrated at the outlet of the evaporators, it is conducted to a finishing device, which removes the rest of the moisture, until it is converted into commercial blood meal.

Although systems of multi-effect evaporators are an option that makes the process of concentrating blood much cheaper than other technologies, they can be equally expensive in certain facilities. For example, if there is a desire to work at boiling temperatures below 55°C, with the aim of minimising protein deterioration, the thermal differential available in relation to a room temperature of 25°C is only 30°C. This value implies that in practice only two or at most three evaporators will be used, which limits the energy saving with respect to other typical systems having four or more evaporators. For this reason, it is still necessary to find additional techniques that reduce the energy cost of systems of multiple-effect evaporators.

When the blood leaves the system of multiple-effect evaporators, it is more concentrated than the raw blood that entered the system, and it is exposed to the drying treatment of finishing equipment for drying. There are two types of finishers: direct and indirect contact. In direct contact finishers the fluid that gives heat to the blood (heating fluid) comes in contact therewith, while in indirect contact finishers there is no such contact; a metal surface separates blood and heating fluid. The most typical examples of direct contact finishers are spray dryers and ring dryers. Digesters and drum dryers stand out among the indirect contact finishers.

In spray dryers, the blood is sprayed by a spraying mechanism and passed through a stream of hot air at about 170°C. This equipment has the disadvantage of working at high temperatures. Although the contact time between the blood and air is very short, it contributes to increasing protein denaturation. Another drawback that they present is that they do not eliminate the volatile particles that cause bad odours characteristic of the production of blood meal. The large volumes of hot air that they generate can even increase the emissions of bad odours. Examples of spray dryers are those disclosed in patent documents US4187617A and US5624530A.

In the ring dryers the blood remains in a suspended stream of air that follows a cyclic path through a ring-shaped closed duct. A dryness sensor extracts from said path those particles that have lost certain moisture, and they end up in a cyclone decanter. The drawbacks of this system are the same as those described for spray dryers. Both spray dryers and ring dryers have the particular feature, by virtue of managing a suspended flow of blood in the form of small droplets in the air, of having a large heat exchange surface. This affects the size of the equipment and the drying time, which will be shorter than in direct contact systems. An example of this equipment is the one disclosed in document US2351091A.

Digesters are tanks with an outer jacket, through which a heating fluid circulates. Inside the tank there are stirrer mechanisms, which stir the blood to be dried once it enters the digester. The digesters can operate in a vacuum and therefore at low temperatures; in this regard, they can cause the deterioration of the blood meal to be lower than that of the two previous systems. Furthermore, it can be sealed, which makes it easier to manage bad odours. In contrast, the heat exchange surface of these systems is much smaller than that of direct contact systems, requiring larger equipment and longer drying times. Digesters are well known in the state of the art.

In drum dryers the blood is poured on heated cylinders, forming a thin film, which dries. To descale the layer of dried blood adhered to the walls of the cylinders, these cylinders rotate and are subjected to the pressure of a blade, which removes the scale. The advantages and disadvantages of these devices are similar to those of the digesters. An example of this type of device is the one disclosed in document ES463346A1.

Another relevant phenomenon is that blood is a biologically active fluid with the presence of animal cells and important biochemical activity. This feature establishes a crucial difference between blood and commonly used industrial fluids. Part of said activity consists of the formation of clots of blood components, largely due to the action of fibrin. These properties have to be taken into account in technical solutions.

It is therefore of interest to develop devices that solve the problems presented herein and, more particularly, that combine the advantages of the direct and indirect contact devices, while avoiding the disadvantages thereof.

DE2849862A1 discloses a combined convection and radiation system for multistage vacuum evaporation.

### DESCRIPTION OF THE INVENTION

Therefore, there is a need for new systems for processing blood and/or derivatives which solve at least one of the mentioned problems. An objective of the present invention is to meet said need.

The invention is a device according to claim 1, and a process according to claim 10.

In the present document, the term "blood" does not refer only to raw blood freshly extracted from a slaughtered animal. The term also includes the various products derived from said blood, although technically they are not called "blood". The substances obtained from the addition or removal of raw animal blood components are understood to be a product derived from blood. For example, derived products would be blood plasma, red blood cell paste, partially dehydrated blood, blood with anticoagulant salts, blood with preservatives, etc.

Blood has a large number of particular features that substantially differentiate it from the vast majority of fluids for industrial use. This is because it is a fluid coming from living beings, which has high biochemical activity. Clot formation and protein denaturation are especially worth noting. Both properties make the processing thereof very difficult. Clots contaminate the heat exchange surfaces and make it difficult or impossible to pump blood. Denaturation causes the blood to stop flowing and become a solid. All these features make it particularly difficult to handle blood, and the present invention directly affects them.

When blood circulates in living beings, coagulation is usually inhibited, but should it flow out of the body. it begins in a time usually to the order of several minutes. The biochemical mechanism which causes coagulation is as follows. Blood contains a protein, fibrinogen, which by means of the enzyme thrombin is converted into fibrin, another fibrous protein, with the capacity to polymerise and thus form large three-dimensional networks. These networks act like a glue, and readily trap large amounts of blood cells, thus forming a clot.

Multiple-effect evaporation systems are a technology that significantly lowers the energy costs of dehydration processes, because they take advantage of the condensation heat of the vapour produced in each individual effect several times. In this invention the raw blood or derivative is injected into said system, where it loses water until reaching a specific concentration. The level of concentration will depend on the type of evaporators. It is typical to dehydrate the blood up to 30% dry matter, but in scraped-surface evaporators this value can increase substantially. Once concentrated, the blood leaves the system of evaporators and enters the dryer, which will remove the remaining water until the blood has the commercial moisture content, usually around 10% on a dry basis.

It is contemplated that the dryer comprises heat transmission by indirect contact and by direct contact. The dryer comprises heat exchange plates located in a vertical position, further comprises a first chamber, for a heating fluid (for example hot water), and a second vacuum chamber for the heated medium, in this case the blood, and for a gaseous mixture that directly warms the blood. The dryer further comprises a second chamber characterised in that it comprises stirring means for stirring the blood, which also exert a scraping effect on said exchange plates. Scraping allows the removal of the layer of soil on the plates and increasing the heat transfer coefficient.

Another feature of the dryer that makes it particularly interesting is the high ratio: (heat transfer surface / dryer volume). This is achieved with the arrangement of the vertical plates, close to each other, and with the thermal contact between plates and stirring means, which act a manner equivalent to heat dissipation fins. The aforementioned ratio is much smaller in other equipment of the state of the art, such as digesters, where the only heat exchange surface is usually in the outer, usually cylindrical, shell that surrounds the digester. In the present invention, the heating means can travel through the outer shell of the dryer, as in traditional digesters, but also through the inside thereof, through vertical exchange plates. Furthermore, when the stirring means are in contact with the plates, these plates transmit heat to said stirring means. In this way the stirring means extend the heat transfer surface beyond the plates, in a manner equivalent to that of the heat dissipation fins in an electric motor, a computer processor, etc.

In order to promote heat transfer between plates and stirrers, the following is taken into consideration. First, the stirrers must be made of a material that is a good heat conductor. The dryers and other equipment used in the food industry are usually made up of materials, such as stainless steel, which provide very good mechanical strength and acceptable heat conduction, for example around 15 W/m·K. In the case of the stirrers, they should be made of a material that conducts heat much better than stainless steel. In the present invention, and preferably, the stirrers are made of aluminium or of an alloy thereof. Aluminium alloys for food use can have a thermal conductivity higher than 200 W/m·K, and at the same time have adequate mechanical capacities, especially in applications at low temperatures, as is the case of the present invention. Furthermore, the alloys have to provide suitable elasticity to the stirrer, so that said stirrer undergoes a certain deformation when pressed against the plate, to thus increase the contact surface between both elements and therefore accelerate the heat transfer. Examples of alloys that satisfy all the properties of conductivity, mechanical strength and elasticity, and also offer good resistance to corrosion are the following:
- aluminium with 2% iron and 0.6% copper.
- aluminium with 13.5% silicon, 4% manganese and 3% nickel.

Preferably, the dryer is entirely made of stainless steel, for example of the AISI 316L type, except for the stirrers, which are preferably made of aluminium alloy. Stainless steel provides mechanical strength higher than that of aluminium alloy, which makes it an ideal material to support the very weight of the equipment, dynamic stresses and the differences of pressure between chambers. However, this invention makes use of the particular feature that the stirrers are subjected to mechanical loads lower than those of the rest of the dryer in order to build them from another material, which sacrifices mechanical strength in favour of thermal conductivity and elasticity. The stirrers are not subject to pressure differences, and the weight they have to support is low.

A fluid that provides heat for drying circulates in the first chamber of the dryer, and the blood to be dried and, if necessary, a gaseous mixture that gives heat to the blood by direct contact circulate in the second chamber. Each chamber is divided into a set of sub-chambers connected to each other, forming a single volume. A sub-chamber belonging to one of the two chambers is located between every two contiguous plates. By way of example, considering a dryer with 10 plates, numbered consecutively 1, 2, 3, ..., 10, the blood to be dried and the aforementioned gaseous mixture circulates between pairs 1-2, 3-4, 5-6, 7-8 and 9-10, and a heating fluid exclusively circulates between the complementary pairs: 2-3, 4-5, 6-7 and 8-9. Configurations of this type and their operation are known in the state of the art, and further clarification is not required. The separation contemplated between each pair of contiguous plates is preferably to the order of several centimetres.

In an embodiment of the invention, contiguous plates are separated by 66 mm, and eight stirrers are arranged in each sub-chamber, thus achieving a ratio of approximately 32m² of exchange surface per cubic metre of dryer, a value that approaches twice that of the same embodiment but without stirrers. A fundamental advantage of aluminium alloy compared to the other materials common in the art, such as stainless steel, is that it enables the dimensions of the stirrers to be increased for thermal effects, thus increasing the exchange surface. This is due to the phenomenon of temperature drop in a metal heat dissipation fin: when we have a fin (or the equivalent thereof as a stirrer in the present invention) in contact with a heat source, the heat moves along the fin, but the temperature thereof decreases with the distance to the heat source. That is, at the points of the fin in contact with the heat source, the temperature thereof will coincide with that of the source, but at points far from the source, the temperature will fall, and do so proportionally to the distance that separates them. This phenomenon is known to all persons skilled in the art and no further explanation is necessary. The importance of the aluminium alloy lies in the fact that the temperature drop is more gradual than with other materials, which makes it possible to have more extensive stirrers. By way of illustrative example, we take a heating medium at 60°C, and blood boiling at 50°C, which implies a thermal differential of 10°C. If the minimum differential to be maintained is 4.6°C, for the purpose of efficient heat transfer, then a temperature drop of up to 5.4°C (10 - 4.6) would be permissible in the stirrers. And for aluminium alloys this drop enables stirrers to have dimensions much greater than the equivalent dimensions for stainless steel. This increase in dimensions implies a greater heat exchange surface, and a higher ratio: (exchange surface / dryer volume). The inventors consider the two alloys indicated above to be of special interest.

In the present invention it is contemplated that the operation of the dryer can be either batch or continuous. In the batch version, the concentrated blood that leaves the system of evaporators is first collected in a tank. Once all the blood has evaporated, the concentrate is transferred from this tank to the dryer. In continuous operation, said tank is not used, but rather the concentrated blood flows constantly from the outlet of the system of evaporators to the dryer.

Both in the case of batch and continuous operation, the blood in the dryer is initially in liquid state. As the drying proceeds, it loses water and therefore fluidity, and gradually becomes a pasty and/or powdery substance. At the end of the drying it is converted into commercial blood meal, with a moisture content around 10% on a dry basis.

Drying should proceed while avoiding problems of blood coagulation, microbial proliferation and the emission of bad odours:
a) Blood coagulation can occur in liquid blood. It diminishes the fluidity thereof, increases the viscosity and increases the ability of the blood to adhere to the heat exchange surfaces, this soiling them. Likewise, coagulation requires a subsequent treatment of comminution, for example by means of a hammer mill.
b) Microbial proliferations in the blood can be a public health problem. Drying is done under vacuum and therefore at temperatures lower than those common in the industry, as an indication, between 40 and 70°C. In this range some microorganisms may be active, which requires biocidal measures.
c) A common problem in the desiccated blood production industry is the emission of bad odours. Volatile particles resulting from the drying of the blood usually have an unpleasant odour, requiring treatment in this regard.

The inventors have found a chemical agent in ozone that is capable of very effectively solving the three previous problems. It was observed that when the ozone is bubbled in liquid blood, it stops the coagulation thereof. Furthermore, ozone is a very potent bactericidal agent, to the order of several hundred times stronger than chlorine, and the use thereof is compatible with the food industry. In addition, ozone is very effective at destroying volatile substances that cause bad odours.

Additionally, the level of vacuum existing in the dryer makes it possible to have a bacteriostatic effect on the blood to be dried, especially against aerobic bacteria. This phenomenon is known in the food industry, for example with the technique of product preservation by vacuum packaging.

Treatment with ozone is divided into two phases. The first phase is one in which the blood is liquid, and the ozone is bubbled in it, for the purpose of being dissolved therein. In the second phase, the blood ceases to be liquid, and the injected ozone forms part of the gaseous atmosphere that surrounds it. The biocidal and anticoagulant effects of the ozone are mainly concentrated in the first phase, while the deodorising effects are concentrated in the second phase.

In the second phase the low moisture of the blood is in itself a biocidal factor. This phenomenon is known through any of the methods of food preservation by dehydration. And since in the second phase the ozone hardly has any water in which to dissolve, it remains in the atmosphere that surrounds the blood in a pasty and/or powdery state. This atmosphere also contains the volatile substances that cause bad odour, which is why in this phase the ozone mainly acts as a deodoriser.

It is known by the person skilled in the art that the solubility of ozone in water depends, among other factors, on the concentration of the ozone in the gaseous mixture injected into the dryer and on the pressure inside it. The higher the concentration and pressure, the greater the solubility. For reasons of food safety, it is necessary to provide for important microbial concentrations in liquid blood. Since most of the biocidal effect of the ozone will be concentrated in the first phase of drying (liquid blood), greater ozone needs are contemplated than in the second phase. For these purposes, in order to dissolve the desired amount of ozone in the blood, it is contemplated that in the first phase the ozone concentration and the pressure in the dryer are greater than in the second phase. By way of illustrative and non-limiting example, it is contemplated that the first phase takes place under vacuum with an absolute pressure of 350 mbar and the injected gaseous mixture contains 400 g/Nm³ of ozone; and the second phase at 150 mbar and a mixture with 150 g/Nm³ of ozone.

Depending on the needs, the source of the ozone can be atmospheric air or an oxygen bottle. The second option is considered to be particularly interesting during the first phase of drying, because it enables the gaseous mixture to be injected into the dryer to have ozone concentrations higher than those corresponding to the case of air.

An additional novelty of great relevance that is disclosed by the present invention consists of the inclusion of an ozone heater. Said heater preferably acts in the second phase, to contribute to the completion of the drying process. In addition, the injection of hot ozone in the second phase helps maintain the drying speed constant. In the first phase, the blood has a large amount of water, which generates convection that accelerates heat transfer and evaporation. However, in the second phase the amount of water is lower, and the blood acquires a pasty and/or powdery texture with a lower density than in the first phase, because it accumulates pores of air therein. This feature reduces the heat transfer coefficient and therefore the drying speed in the second phase. One way to compensate for this and contribute to a constant velocity is to accelerate drying in the second phase with the addition of hot ozonised gas.

The heater raises the temperature of the gaseous mixture with ozone injected in the dryer, so that it gives this heat to the blood and thus contributes to the dehydration thereof. By way of illustrative example, if in the second phase of drying there is a vacuum of 150 mbar, corresponding to a boiling temperature around 53°C, the ozonised mixture can be heated to 70°C and then injected in the dryer. In this way the mixture contributes, with its contribution of thermal energy, to drying. This phenomenon is especially relevant because it enables combining in the same dryer the indirect drying technique, through metal heat transfer surfaces (plates and stirrers), and the direct drying technique (hot gas). As is known by the person skilled in the art, direct drying with hot gas considerably increases the heat transfer surface, especially when the gas passes through a powdery product, as is the case with spray dryers. In this sense, the disclosed dryer combines both indirect and direct drying, benefiting from some advantages of spray dryers, which involve direct contact.

As for the energy sources of the system of evaporators and the dryer, various possibilities may be contemplated. On the one hand, it would be possible to make use of conventional systems, such as hot water, thermal oil or vapour coming from a boiler. But according to the invention, the thermal energy of the residual effluents produced in an industry is used, which may come out at a temperature above a certain minimum threshold, as an indication, 55°C. In a particularly interesting way, said industry will be the very factory in which the invention proposed herein is installed. In the case of a slaughterhouse, the production of large quantities of residual fluids at temperatures above 55°C is common. For example, pig scalding water can be found at temperatures between 60 and 80°C. The cleaning waters typically have a temperature of around 65°C. Regardless of their origin, residual effluents are pollutants and are destined for a waste treatment plant; therefore, their use as an energy source is of ecological relevance. The low temperatures thereof significantly limit their industrial applications, but the vacuum processes, the case of the present invention, enable the efficient use thereof. By way of illustrative example, if the absolute pressure in the dryer is 150 mbar, the boiling temperature of the water will be approximately 53.6°C. If the energy source is the cleaning water, which is around a temperature of 65°C, there is a thermal differential of 65 - 53.6 = 11.4°C, which will allow the effluent to transmit heat to the blood inside the dryer, to produce the vacuum drying thereof. If, instead of vacuum, the dryer were at atmospheric pressure, with a water boiling temperature of around 99°C, the energetic use of the effluent would be impossible; hence the importance of vacuum operation of the processes of this invention.

A more complicated case occurs when the temperatures of the residual effluents are lower than the aforementioned threshold of around 55°C. In order to continue using the thermal energy in this situation, the provision of a heat pump is contemplated. In it, a cooling fluid suitable for the food industry, such as R-134a, is circulated in a closed circuit comprising a compressor and an expansion valve. Said cooling fluid absorbs heat from the residual effluent, and delivers it in the system of evaporators or dryer at a temperature higher than that of the effluent. To illustrate this property, the residual effluent could have a temperature of 42°C, and passing through a heat exchanger it gives thermal energy to the R-134a fluid, which passes through the same exchanger, in another chamber and at a lower temperature, for example 32°C. This temperature difference of 42 - 32 = 10°C enables the residual effluent to transmit thermal energy to R-134a, which will subsequently raise the temperature thereof by the action of the compressor, to a value above 42°C of the effluent, for example 65°C. Once at 65°C, the R-134a fluid moves to the dryer and gives the blood the thermal energy it absorbed from the effluent, which is boiling at 53.6°C. When leaving the dryer, the R-134a fluid passes through the expansion valve, reduces the pressure thereof and consequently lowers the temperature thereof, to the 32°C already mentioned. The cycle repeats in this way. No further explanation is deemed necessary, as this is subject matter widely known by the person skilled in the art.

In another aspect, the present invention also relates to a method for obtaining a desiccated product from blood or derivatives which is described below.

The method for obtaining a desiccated product from blood or derivatives, characterised in that it comprises the following steps:
a. injecting blood in a system of multiple-effect evaporators, where it is concentrated;
b. injecting the concentrated blood that leaves the system of evaporators in a dryer with vertical plates;
c. continuous stirring of the blood in the dryer, by means of stirrer mechanisms, which eliminate scale and extend the exchange surface;
d. injecting ozone inside the dryer; and
e. injecting energy into the system of evaporators and/or dryer by means of residual effluents from an industry.

In another aspect of the method, the residual effluents are circulated by a heat pump.

In another aspect of the method, water from the network consumed by an industry is circulated as a cold fluid that condenses the vapours that leave the system of evaporators and/or dryer.

The drying of blood by means of the method object of the present invention is carried out in two phases
a) a first phase, at a given pressure, ozone temperature and ozone concentration, which takes place at an absolute pressure of 350 mbar and in which the ozone concentration is 400 g/Nm³ and the heater remains inactive; and
b) a second phase, after the first, at a pressure, ozone temperature and ozone concentration with values different from those corresponding to the first phase. In a particular embodiment the second phase proceeds at an absolute pressure of 150mbar, the ozone concentration is 150 g/Nm³ and the heater is activated, heating the ozone to 67°C.

In another aspect of the method, the dried blood that leaves the dryer is passed through a hammer mill.

The raw blood is collected in an accumulation tank and then injected into a system of multiple-effect evaporators. The system of evaporators is optionally powered by the energy provided by residual effluents from an industry, with or without the intervention of a heat pump. The blood goes through the system of evaporators, and at the outlet thereof it contains less water than at the inlet thereof.

In the case of batch operation, the blood that comes out concentrated from the system of evaporators is injected into a tank, where it accumulates. Once the system of evaporators has already processed the expected amount of blood, it stops its activity, and from the cited tank it begins to send blood to a dryer.

The option is contemplated where the condenser of the system of evaporators uses the water from the network consumed by an industry as a cold fluid.

The dryer receives liquid blood, which loses moisture until it becomes blood meal. The dryer is optionally powered by the energy provided by residual effluents from an industry, with or without the intervention of a heat pump. During the whole process, stirrer mechanisms act, which move in a rotational movement around a shaft. These mechanisms remove scale, increase the heat transfer coefficient and extend the heat exchange surface.

A first phase of drying is distinguished, in which the blood remains in a liquid state and flows easily. In a second phase, after the first phase, the blood ceases to flow easily and/or acquires greater viscosity. The possibility of a different treatment for both phases is contemplated, where each phase proceeds at the most advantageous pressure and ozone concentration. The following differentiated treatment is particularly interesting:
- During the first phase of drying, biocide and anticoagulant effects are concentrated. The vacuum pump maintains the dryer at a certain pressure and the ozoniser injects a gaseous mixture with a certain ozone concentration.
- In the second phase of drying the deodorising effects are concentrated. The vacuum pump reduces the absolute pressure to a value lower than that of the first phase, and the ozoniser reduces the ozone concentration.

Additionally, ozone can be passed through a heater prior to entering the dryer. In this way the ozonised gaseous mixture contributes to the drying of the blood, in a similar way to the operation of a spray dryer.

It is contemplated as an option that the condenser of the dryer uses the water from the network consumed by an industry as a cold fluid.

Once the blood has been made into meal, the possibility of passing it through a hammer mill that comminutes the eventual agglomerations thereof to obtain a powdery product is contemplated.

### BRIEF DESCRIPTION OF THE FIGURES

The modalities described in detail in the figures are illustrated by way of non-limiting example:
**Figure 1** shows a flow diagram of the system object of the present invention.
**Figure 2** shows a schematic representation of the dryer. Some dimensions are exaggerated to favour better understanding.
**Figure 3** shows a longitudinal cross section of a particular embodiment of a dryer.
**Figure 4** shows an enlarged detailed view of the dryer shown in Figure 3.
**Figure 5** shows a perspective view, partially cross-sectioned, of a dryer according to Figures 3 and 4.
**Figure 6** shows a cross-section perspective view of two heat exchange plates.
**Figure 7** shows a representation of a stirrer in contact with a thermal plate.

### DETAILED DESCRIPTION OF THE INVENTION

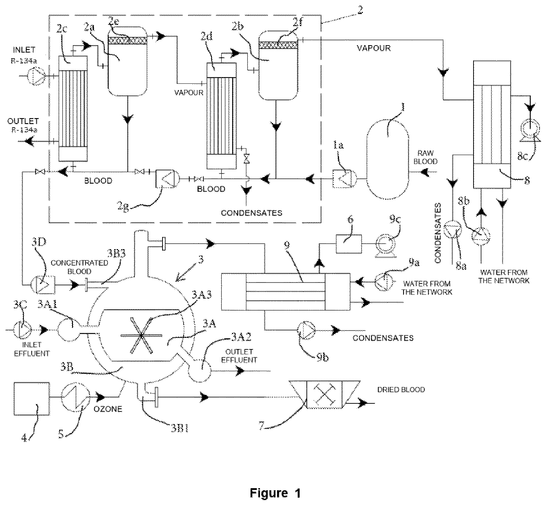

Figure 1 shows a flow diagram for the installation with continuous operation. The so-called "technical blood" of slaughtered animals is obtained, that is to say blood under hygienic conditions. The technique for obtaining it comprises the use of a hollow blade knife connected to a tube with vacuum suction. The raw blood thus extracted is directed to an accumulation tank (1). Each time the system requires blood, a peristaltic pump (1a) moves it from the tank (1) to a system of evaporators (2). The peristaltic pumps are specially indicated for the displacement of blood, because they operate under very high hygiene conditions and tolerate viscous products and the presence of some clots.

The system of evaporators (2) operates under vacuum and in a particular embodiment comprises two evaporators. Its function is to capture raw blood from the accumulation tank (1) and concentrate it to a certain moisture content. In the present embodiment, preferably but not limited thereto, the blood is concentrated to 30% solid on a wet basis. The systems of evaporators are widely known by the person skilled in the art, such that it is not considered necessary to provide an explanation about their constitution or operation. Furthermore, the present invention contemplates the possibility of installing any type of system of evaporators, for example with natural or forced circulation, with long or short vertical tubes, with horizontal tubes, with falling film, etc. With a non-limiting nature of the scope, the basic features of a preferred type of a system of exchangers are described below.

The system of evaporators (2) consists of two evaporators in series, operating in countercurrent. It has natural circulation. The heat exchangers (2c and 2d) are vertical and of the shell and tube type. The exchangers (2c and 2d) are connected to separate vapour separators (2a and 2b), which comprise denebulisers (2e and 2f). For the transfer from one evaporator to another, the system (2) comprises a peristaltic pump (2g). No further explanation is necessary because they are outside the essence of the invention and they are obvious to the person skilled in the art.

The vapour that leaves the system of evaporators (2) passes through a condenser (8) and at the outlet thereof it is sucked by a vacuum pump (8c). The pump (8c) sucks those components that could not be condensed in the condenser (8). The vacuum level operating in the system of evaporators (2) is maintained both by the action of the condenser (8) and the pump (8c). The condenser (8) is located vertically, and the vacuum pump (8c) is conveniently located in the upper area of the condenser (8), to avoid sucking condensates, which accumulate by gravity in the lower area of the condenser (8). The condensates are removed to the outside by means of a centrifugal pump (8a). The cold fluid that absorbs heat from the vapour to be condensed is the water from the network that an industry consumes. This water comes at a usual temperature between 7 and 20°C, depending on the place and time of year, and is used in large quantities by slaughterhouses, for tasks such as cleaning, sterilisation, boiler feed, etc. At the outlet of the condenser (8), the water from the network is at a higher temperature than the inlet temperature. Taking into account that meat industries or slaughterhouses need to heat a large part of the water from the network that they consume, this condenser (8) entails energy saving. By way of example, a slaughterhouse typically needs to heat 60% of the water from the network that it consumes at temperatures greater than 62°C, in order to use it as cleaning water. The water from the network is driven through the condenser (8) by means of a centrifugal pump (8b).

The energy source of the system of evaporators (2) is a heat pump in which the R-134a cooling fluid circulates. This fluid enters and leaves the system (2) through corresponding inlet and outlet pipes. The heat pump absorbs energy from residual effluents from a slaughterhouse which comprise cleaning water at 40°C.

The concentrated blood leaves the system of evaporators (2) and is driven by a peristaltic pump (3D) to the dryer (3). Since the system operates continuously in this embodiment, there is no accumulation tank between the system (2) and the dryer (3); the blood flows directly and continuously from the first to the second. The dryer has two sealed chambers. One of them is the evaporation chamber (3B), which contains blood in evaporation, to be dried to the desired moisture content. The other is the heating chamber (3A), which is traversed by a residual effluent from a slaughterhouse. The blood enters the evaporation chamber (3B) through the corresponding inlet duct (3B3) and once it dries, it leaves it through an outlet duct (3B1). The vapour and other volatile substances present in the chamber (3B) are removed to the outside of the dryer (3) through a vertical duct (3B2). This duct (3B2) has a diameter and length that make it a gravimetric separator, according to the Souders-Brown equation. No further explanation is deemed necessary in this regard because it is a subject well known to the person skilled in the art.

The blood is stirred by the action of stirring means (3A3), which are inside the evaporation chamber (3B).

The heating fluid in this embodiment is a residual effluent, more specifically water at 62°C from a pig scalding bath. This effluent is driven by means of a centrifugal pump (3C) and is injected, through an inlet manifold (3A1), into the heating chamber (3A) of the dryer (3). Once the chamber (3A) has been traversed, the dried blood leaves through an outlet manifold (3A2). The moisture content is around 10% on a dry basis. To comminute the possible agglomerations of the dried product, the dried blood is passed through a hammer mill (7).

The vapour and other volatile substances that leave the dryer (3) pass through a condenser (9), located in a horizontal position, at the outlet from which they are sucked by a vacuum pump (9c), placed in the upper area of the condenser (9). The principles set out for the condenser (8) of the system of evaporators (2) can be extended for this second condenser (9). The cold fluid is also water from the network, driven with a first centrifugal pump (9a), and the condensates, accumulated in the lower area, are removed with a second centrifugal pump (9b).

To ensure the asepsis of the dried blood, the elimination of odours and to avoid coagulation, an ozoniser (4) is available, which injects ozone inside the dryer (3). The ozoniser (4) is supplied with a bottle of pure oxygen, not shown. In order to inject the ozone at the suitable temperature for each drying phase, it passes through a heater (5) before the dryer (3). The ozone that has not reacted in the dryer (3) leaves it through the vertical duct (3B2), passes through the condenser (9) and reaches an ozone destructor (6), prior to the vacuum pump (9c). Ozone destructors are known by the person skilled in the art.

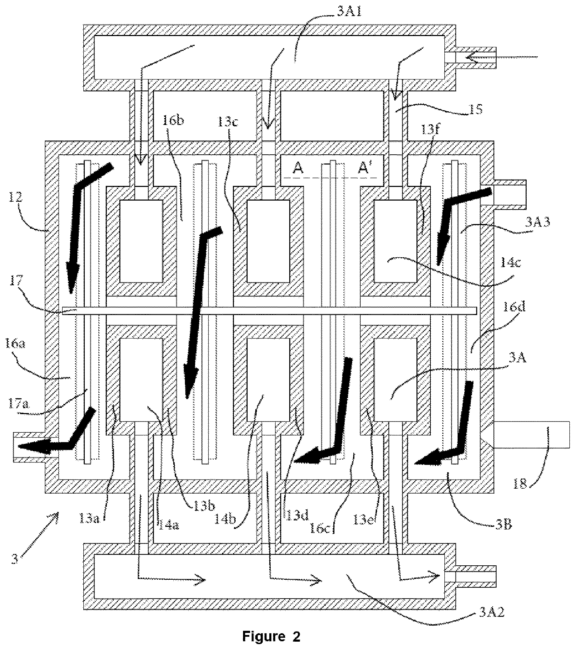

Figure 2 shows a schematic drawing of the dryer (3) to illustrate the nomenclature used herein. The measurements and proportions are exaggerated for the purpose of increasing clarity. A shell (12) can be seen, inside of which there are housed a total of six heat exchange plates (13a, 13b, 13c, 13d, 13e and 13f). In this particular embodiment there is shown an evaporation chamber (3B), through which blood circulates, and a heating chamber (3A), through which a residual effluent circulates, for example scalding water. The blood and effluent routes are indicated representatively by arrows; for the effluent the line is thin, and for the blood the line is thick. The separation between both chambers (3A and 3B) is leak-tight, such that at no time does contact between the two fluids occur. In this particular embodiment, the heating chamber (3A) comprises a total of three sub-chambers (14a, 14b and 14c), which are all connected through pipes (15) to two manifolds (3A1 and 3A2), such that they form a single volume, the aforementioned heating chamber (3A). The evaporation chamber (3B) comprises four sub-chambers (16a, 16b, 16c and 16d), which are also all in communication, also forming a single volume, with the aforementioned evaporation chamber (3B). A stirrer (3A3) actuated by a shaft (17) is housed inside each of the sub-chambers (16a, 16b 16c and 16d) of the evaporation chamber (3B).

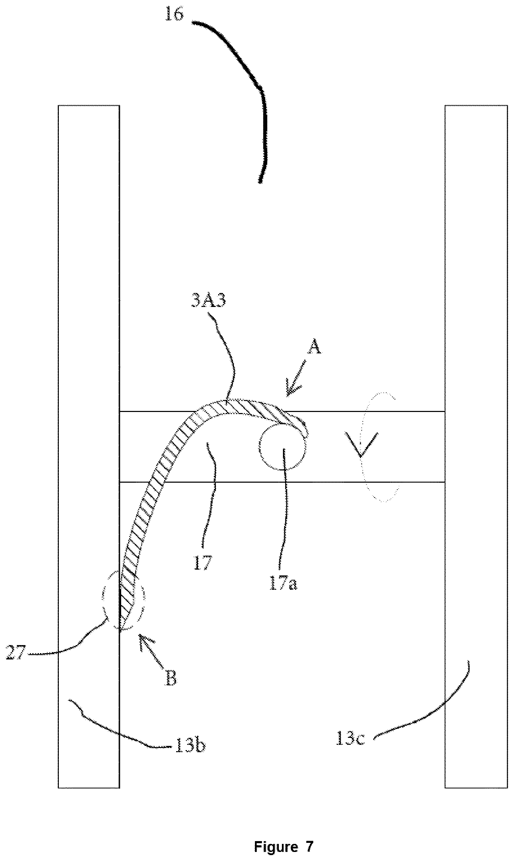

The stirrers (3A3) are welded on a rod (17a), which is fixed on the shaft (17). The rod (17a) and the shaft are perpendicular, as shown in the figure. For reasons of simplicity in the drawing, in this schematic figure the stirrers (3A3) do not make physical contact with the exchange plates (13a, 13b, 13c, 13d, 13e, 13f), since they have been drawn with an insufficient length. In order to define the length of the stirrers (3A3), the plane A-A' is defined, which is perpendicular to the paper, parallel to the shaft (17) and perpendicular to the rods (17a). In Figure 7, the proportions are not exaggerated, the contact between stirrer (3A3) and plates is shown, and reference will be made to the plane A-A' represented in this figure.

It can be seen that a sub-chamber is housed between every two contiguous plates. Thus, for example, the sub-chamber (14a) belonging to the heating chamber (3A) is located between the plates (13a) and (13b). The sub-chamber (16b) belonging to the evaporation chamber (3B) is located between the plates (13b) and (13c). It must be observed that at each of the two ends of the dryer (3) there is located a sub-chamber (16a and 16d) which, as an exception, is not located between two contiguous plates (13a, 13b, 13c, 13d, 13e and 13f), but rather between plate and shell (12).

A duct (18) is seen passing through the shell (12), through which the ozone is injected into the dryer (3).

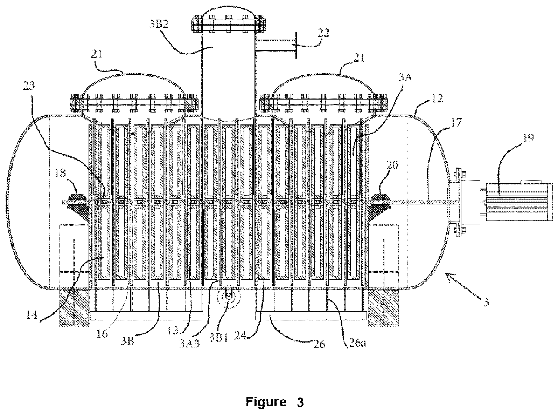

Figure 3 shows a particular embodiment of a dryer (3). It comprises an outer shell (12), which houses therein the heat exchange plates (13) and stirrers (3A3) welded to rods (17a), which describe a rotational movement by means of being secured to a shaft (17), with said shaft being actuated by a motor (19) outside the shell (12). The shaft is supported inside the dryer by means of respective supports (20), which hold it while at the same time promote its rotation. To that end, the supports (20) are formed as sliding contact bearings that do not require lubrication.

The shell (12) has in the upper part thereof two manholes (21), in order to allow access to the inside thereof for cleaning, inspection, repair, etc. They are particularly advantageous for manual cleaning and removal of any accumulation of fibrin after each working day. A gravimetric decantation duct (3B2) is located in the central part which helps to purify the vapour that is obtained from boiling the blood. More specifically, the diameter thereof is selected such that the rate of ascent of the gases is slow enough so that the suspended liquid particles do not follow the gas along its upward path through the duct (3B2), but rather precipitate due to gravity. In the upper area of said duct (3B2) there is an outlet pipe (22) for the vapour, which is to be conducted to the condenser.

The blood is injected at a point (not shown in the figure) of the upper area of the dryer (3), falls due to gravity and then occupies the volume of each of the sub-chambers (16) of the evaporation chamber (3B). These sub-chambers (16) are traversed by stirrers (3A3), welded to rods (17a) fixed on the shaft (17), and which develop a rotational movement. The blood is therefore under mechanical stirring at all times.

The sub-chambers (14) of the heating chamber (3A) must enable the rotating shaft (17) to pass through them, and at the same time enable the leak-tightness to be maintained between both chambers (3A and 3B). To that end, each pair of contiguous plates (13) demarcating a sub-chamber (14) have a circular perforation in the centre thereof, which the shaft (17) can pass through, and a cylindrical part (23) is arranged concentric with both perforations, but having a larger diameter and welded to both plates (13). Mobility of the shaft (17) and leak-tightness are thereby ensured.

To demarcate the heating chamber (3A) and make it leak-tight, enclosures (24) are arranged welded around the perimeter of each pair of contiguous plates (13) which enclose a sub-chamber (14). The enclosures (24) are adapted to the geometry of the plates they join; if for example the plates to be joined are circular, the enclosures will have a cross section in the shape of a circular ring. The solutions described in this paragraph and in the preceding paragraph are common in the state of the art and further explanations are not considered necessary.

The blood outlet duct (3B1) is located in the lowermost area of the depicted dryer (3). Through it the dried blood is removed to the outside.

Next to the floor, and externally to the shell (12), two ozone distributing ducts (26) are arranged, which inject it into the dryer (3). From these ducts (26) emerge pipes (26a), which conduct ozone to specific areas of the dryer (3), to ensure proper distribution thereof. More specifically, each individual pipe (26a) injects ozone in a certain sub-chamber (16).

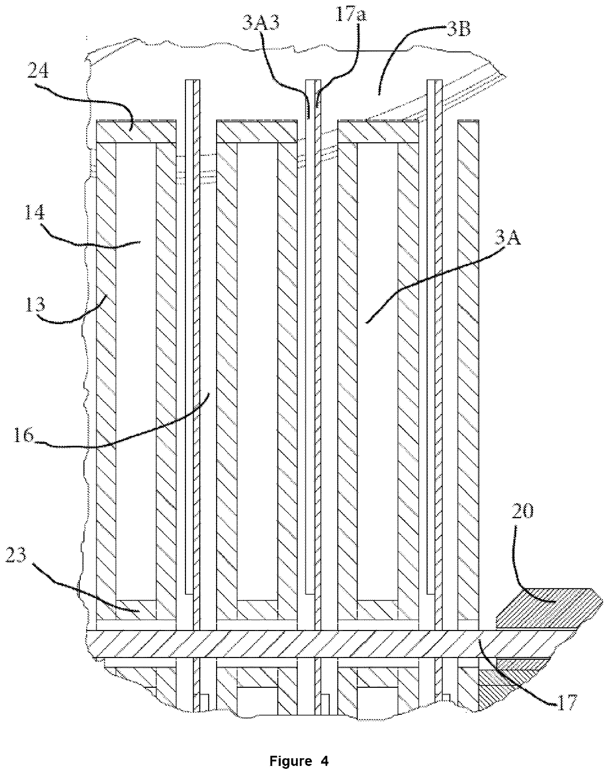

Figure 4 shows a detailed view of Figure 3. A total of six vertical heat exchange plates (13) can be observed. A sub-chamber is arranged between every two contiguous plates. Sub-chambers (16) of the evaporation chamber (3B) and sub-chambers (14) of the condensation chamber (3A), with the corresponding enclosures (24) thereof ensuring leak-tightness between both chambers (3A and 3B), which are arranged in an alternating manner, can be seen. In the first (16), there are located stirrers (3A3) welded to rods (17a), which are attached to the shaft (17), which provides them the rotational movement. By rotating the rods (17a) the stirrers (3A3) rotate with them, by virtue of said welding connection.

The rotating shaft (17) passes through one of the supports (20) thereof and goes through the central part of the six plates (13) and the three sub-chambers (14) of the condensation chamber (3A), as shown in this figure. To ensure leak-tightness, cylindrical parts (23) are welded in the corresponding pairs of plates (13) concentric with the perforations of the plates (13). A total of three of these parts (23) can be seen in the figure. As can be seen, the shaft (17) is immersed in the evaporation chamber (3B), and is therefore covered by the product to be desiccated.

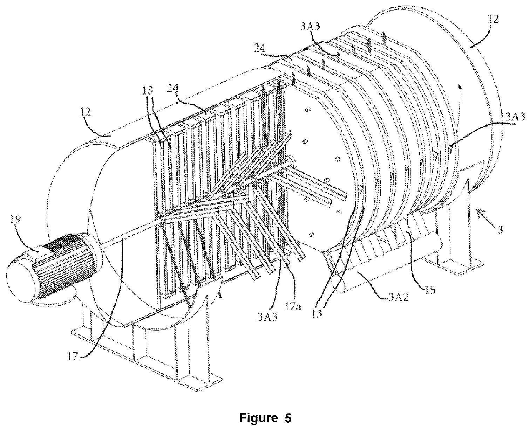

Figure 5 shows a perspective view of a dryer (3) according to Figures 3 and 4. The shell (12) is shown with a partial cross section to make the inside thereof, as well as part of the exchange plates (13) visible. The motor (19), the shaft (17) that it actuates, the rods (17a), perpendicular to the shaft (17), and stirrers (3A3) welded to the rods (17a) are shown. The enclosures (24) are likewise visible. In order to put all the sub-chambers (14) of the condensation chamber (3A) in contact and thereby form a single volume, all of them are connected to a manifold (3A2) through pipes (15). In the figure, there is one pipe (15) for each sub-chamber (14), where the pipes (15) enter the sub-chambers (14), passing through the enclosures (24) thereof. In this case, the manifold (3A2) is an outlet, because it is in a lower area, and the residual effluent (scalding or cleaning water) accumulates on it. For the sake of simplicity, the manholes (21) and the decanting duct (3B2) have been omitted in this figure.

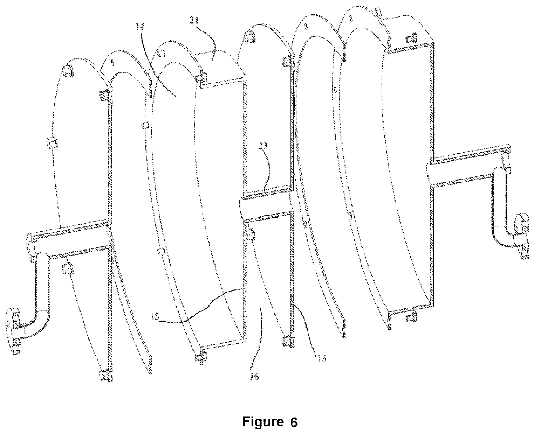

Figure 6 shows a cross-sectional perspective view of two exchange plates (13), with the outer enclosures (24) and the cylindrical part (23) between both plates (13) being visible. The shaft which moves the stirrers (not shown in this figure) goes through the inside of the cylindrical part (23). A sub-chamber (16) of the evaporation chamber and a sub-chamber (14) of the heating chamber are indicated. This figure represents a constructive possibility of the dryer, but its sole purpose is to show in perspective the numbered elements, to help a better understanding thereof, and in no case does it constitute a limiting example of the scope of the invention or restrict it to the construction shown. The outer enclosure (24) is shown in this figure without fixing to respective plates (13), in an expanded position.

In Figure 7, a representation of a stirrer (3A3), in contact with an exchange plate (13b) is shown. Two contiguous exchange plates (13b and 13c) are observed, between which a sub-chamber (16) belonging to the evaporation chamber (3B) is housed. Therefore, it contains blood to be dried. The shaft (17) passes through the sub-chamber (16) and follows a rotational movement, as indicated in the figure. The corresponding rod (17a), perpendicular to the shaft (17), is observed. The stirrer (3A3) is fixed by welding on the rod (17a).

The stirrer is composed of an aluminium alloy with 13.5% silicon, 4% manganese and 3% nickel. This material has very high thermal conductivity, notably higher than that of steels, which enhances the transfer of heat from the plate (13b) to the stirrer itself (3A3). The stirrer (3A3) transmits heat to the blood contained in the sub-chamber (16) shown.

The stirrer (3A3) has a straight shape outside the dryer, in an initial state of rest. To introduce it between the contiguous plates (13b and 13c), the stirrer (3A3) is subjected to a curvature, shown in the figure. The natural tendency of the alloy to recover its original, straight shape produces a mechanical stress which exerts pressure from the stirrer (3A3) on the thermal plate (13b). As a result of this pressure, there is a contact area (27) between the stirrer (3A3) and the plate (13b). The elastic properties of the alloy cause this area (27) to be large enough to facilitate the transfer of heat from the plate (13b) to the stirrer (3A3). With other types of common alloys, for example those derived from steel, the area would be smaller and the heat transfer would be impaired accordingly.

The stirrer (3A3), by virtue of the pressure it exerts on the plate (13b), in turn exerts scraping that eliminates scale, keeping the exchange surface clean. At the same time, this contact between stirrer (3A3) and plate (13b) mechanically breaks the fluid boundary layer, which accelerates heat transfer. More specifically, this rupture causes heat transmission by conduction in a non-stationary state, a fact that implies a remarkable acceleration in the heat transfer.

It is seen that the stirrer (3A3) is welded to the rod (17a) of the shaft (17). The length of the stirrer (3A3) is defined below. A cutting plane is drawn parallel to the shaft (17) and perpendicular to the rod (17a), i.e. a plane like the A-A' plane as shown in Figure 2. The cross section that this cutting plane performs on the stirrer (3A3) is the one represented in this figure by means of a shaded area. In the cross section, two ends of the stirrer (3A3) are distinguished, called A and B in this figure. The end A is that which is welded on the rod (17a), and the end B is the opposite. The length of the stirrer (3A3) is defined as the distance between the ends A and B, traversed by the inside of the stirrer, that is, by the shaded area.

It is important to note that the aluminium alloy enables working with stirrers (3A3) of great lengths. If the material were a steel alloy, the usable length would be much lower. Usable length is understood as the length that enables temperatures higher than that of the boiling fluid to be sustained. It is evident that it is of interest to have stirrers (3A3) of the greatest possible length, since a greater length entails a larger area of contact with blood. And the larger the contact area, the greater the thermal power of the dryer.

Lastly, described below is the method that is carried out in a preferred embodiment of the invention recommended in this document.

The raw blood is collected in an accumulation tank. From this tank it is pumped to a system of multiple-effect evaporators, made up of two evaporators. The energy source of the system is a heat pump that absorbs energy from the cleaning water of a slaughterhouse. The blood passes through the system of evaporators and it is more concentrated at the outlet thereof than at the inlet. The vapour generated in the system of evaporators is condensed in a condenser cooled by the water from the network consumed by a slaughterhouse.

Once out of the system of evaporators, the blood is continuously injected into a dryer, which is powered by the energy provided by a residual effluent, more specifically pig scalding water at 65°C. The blood remains in the dryer until reaching the desired dryness, corresponding to 10% on a dry basis. During the drying process the blood is subjected to the rotating action of stirrers made up of an aluminium alloy with 13.5% silicon, 4% manganese and 3% nickel. The stirrers exert a constant pressure on the exchange surfaces that ensures scraping that eliminates scale, improves the heat transfer coefficient and extends the exchange surface in a way similar to heat dissipation fins.

There are two drying phases. In the first, the blood is liquid and the vacuum pump maintains an absolute pressure of 350mbar, the ozoniser injects a gaseous mixture with 400 g/Nm³ of ozone, and the heater remains inactive. In the second phase, after the first, the blood flows with greater difficulty. The vacuum pump maintains an absolute pressure of 150mbar, the ozoniser injects a gaseous mixture with 150 g/Nm³ of ozone and the heater is activated, raising the temperature of the mixture to 67°C.

The ozone that has not reacted is destroyed in an ozone destructor located at the dryer outlet. The water vapour that leaves the dryer is condensed in a condenser cooled by the water from the network consumed by a slaughterhouse.

The dried blood, once it leaves the dryer, is passed through a hammer mill that gives it a finish in the form of a powdery product.

## Claims

1. A device for obtaining a desiccated product from blood or derivatives **characterised in that** it comprises:
• a multiple-effect vacuum evaporation system (2), which concentrates blood;
• a vacuum dryer (3) of the blood concentrated in the system of evaporators (2), **characterised in that** it comprises vertical heat exchange plates and stirrer mechanisms (3A3) that increase the heat exchange surface;
• an ozoniser (4), which injects ozone into the dryer (3) and exerts some of the effects within the group consisting of deodorising, aseptising and preventing coagulation; and
wherein the system of evaporators (2) and/or dryer (3) use the residual effluents of an industry as an energy source.

2. The device, according to claim 1, **characterised in that** it comprises:
• a first condenser (8), through which circulate the gases that leave the system of evaporators (2); and
• a second condenser (9), through which circulate the gases that leave the dryer (3).

3. The device, according to claim 2, **characterised in that** the cold fluid of the first condenser (8) and/or second condenser (9) is water from the network to an industry.

4. The device, according to any of the preceding claims, **characterised in that** the energy of the residual effluents is used by means of a heat pump.

5. The device, according to any of the preceding claims, **characterised in that** the stirrer mechanisms (3A3) are made of aluminium or an aluminium alloy.

6. The device, according to claim 5, **characterised in that** the stirring mechanisms (3A3) are made of an aluminium alloy composed of 13.5% silicon, 4% manganese and 3% nickel.

7. The device, according to any of the preceding claims, **characterised in that** a heater (5) is interposed between the ozoniser (4) and the dryer (3).

8. The device, according to claim 7, **characterised in that** the gases that leave the dryer (3) pass through an ozone destructor (6).

9. The device, according to any of the preceding claims, **characterised in that** a hammer mill (7) is introduced at the outlet of the dryer (3) through which the dried blood passes.

10. A method for obtaining a desiccated product from blood or derivatives, **characterised in that** it comprises the following steps:
• injecting blood in a system of multiple-effect evaporators, where it is concentrated;
• injecting the concentrated blood that leaves the system of evaporators in a dryer with vertical plates;
• continuous stirring of the blood in the dryer, by means of stirrer mechanisms, which eliminate scale and extend the exchange surface;
• injecting ozone inside the dryer; and
• injecting energy into the system of evaporators and/or dryer by means of residual effluents from an industry.

11. The method, according to the preceding claim, **characterised in that** the residual effluents are circulated by a heat pump.

12. The method, according to claims 10 or 11, **characterised in that** water from the network consumed by an industry is circulated as a cold fluid which condenses the vapours that leave the system of evaporators and/or dryer.

13. The method, according to any of claims 10-12, **characterised in that** the drying of the blood inside the dryer is carried out in two phases:
• a first phase, at a given pressure, ozone temperature and ozone concentration; and
• a second phase, after the first, at a pressure, ozone temperature and ozone concentration with values different from those corresponding to the first phase.

14. The method, according to the preceding claim, **characterised in that**:
• the first phase takes place at an absolute pressure of 350mbar, the ozone concentration is 400 g/Nm³ and the heater remains inactive; and
• the second phase takes place at an absolute pressure of 150mbar, the ozone concentration is 150 g/Nm³ and the heater is activated, heating the ozone to 67°C.

15. The method, according to any of claims 10-14, **characterised in that** the dried blood that leaves the dryer is passed through a hammer mill.

## Patentansprüche

1. Eine Vorrichtung zur Gewinnung eines getrockneten Produkts aus Blut oder Derivaten, **dadurch gekennzeichnet, dass** es aufweist:
- ein Mehrfacheffektvakuumverdampfersystem (2), das Blut konzentriert;
- einen Vakuumtrockner (3) des in dem Verdampfersystem (2) konzentrierten Bluts, **dadurch gekennzeichnet, dass** es vertikale Wärmetauscherplatten und Rührmechanismen (3A3) aufweist, die die Wärmetauschoberfläche erhöhen;
- einen Ozonisator (4), der Ozon in den Trockner (3) einbringt und einige der Effekte, die zur Gruppe bestehend aus deodorisierend, aseptisierend und koagulationsverhindernd gehören, bewirkt; und
- wobei das Verdampfersystem (2) und/oder der Trockner (3) die restlichen Abwässer einer Industrie als eine Energiequelle verwendet.

2. Die Vorrichtung nach Anspruch 1, **dadurch gekennzeichnet, dass** sie aufweist:
- einen ersten Verflüssiger (8), durch den diejenigen Gase, die das Verdampfersystem (2) verlassen, zirkulieren; und
- einen zweiten Verflüssiger (9), durch den diejenigen Gase, die den Trockner (3) verlassen, zirkulieren.

3. Die Vorrichtung nach Anspruch 2, **dadurch gekennzeichnet, dass** kaltes Fluid des ersten Verflüssigers (8) und/oder des zweiten Verflüssigers (9) Wasser aus dem Netzwerk einer Industrie ist.

4. Die Vorrichtung nach einem der vorhergehenden Ansprüche, **dadurch gekennzeichnet, dass** die Energie der restlichen Abwässer mithilfe einer Wärmepumpe verwendet wird.

5. Die Vorrichtung nach einem der vorhergehenden Ansprüche, **dadurch gekennzeichnet, dass** die Rührmechanismen (3A3) aus Aluminium oder einer Aluminiumlegierung hergestellt sind.

6. Die Vorrichtung nach Anspruch 5, **dadurch gekennzeichnet, dass** die Rührmechanismen (3A3) aus einer Aluminiumlegierung hergestellt sind, die aus 13,5% Silizium, 4% Mangan und 3% Nickel besteht.

7. Die Vorrichtung nach einem der vorhergehenden Ansprüche, **dadurch gekennzeichnet, dass** ein Heizer (5) zwischen dem Ozonisator (4) und dem Trockner (3) angeordnet ist.

8. Die Vorrichtung nach Anspruch 7, **dadurch gekennzeichnet, dass** diejenigen Gase, die den Trockner (3) verlassen, durch einen Ozonvernichter (6) verlaufen.

9. Die Vorrichtung nach einem der vorhergehenden Ansprüche, **dadurch gekennzeichnet, dass** eine Hammermühle (7) an dem Ausgang des Trockners (3), durch den das getrocknete Blut verläuft, eingeführt ist.

10. Verfahren zum Gewinnen eines trocknen Produkts aus Blut oder Derivaten, **dadurch gekennzeichnet, dass** es die folgenden Schritte aufweist:
- Einführen von Blut in ein Mehrfacheffektverdampfersystem, in dem es konzentriert wird;
- Einführen des konzentrierten Bluts, welches das Verdampfersystem verlässt, in einen Trockner mit vertikalen Platten;
- kontinuierliches Rühren des Bluts in dem Trockner mithilfe eines Rührmechanismus, der Kalk eliminiert und die Austauschoberfläche vergrößert;
- Einführen von Ozon in den Trockner; und
- Einführen von Energie in das Verdampfersystem und/oder des Trockners mithilfe restlicher Abwässer einer Industrie.

11. Verfahren nach dem vorhergehenden Anspruch, **dadurch gekennzeichnet, dass** die restlichen Abwässer durch eine Wärmepumpe zirkuliert werden.

12. Verfahren nach Anspruch 10 oder 11, **dadurch gekennzeichnet, dass** das Wasser aus dem Netzwerk als ein kaltes Fluid zirkuliert wird, das die Dämpfe kondensiert, welche das Verdampfersystem und/oder den Trockner verlassen.

13. Das Verfahren nach einem der Ansprüche 10 bis 12, **dadurch gekennzeichnet, dass** das Trocknen des Bluts innerhalb des Trockners in zwei Phasen durchgeführt wird; nämlich
- in einer ersten Phase bei einem vorgegebenen Druck, Ozontemperatur und Ozonkonzentration; und
- in einer zweiten Phase nach der ersten Phase bei einem Druck; Ozontemperatur und Ozonkonzentration, deren Werte sich von den entsprechenden der ersten Phase unterscheiden.

14. Das Verfahren nach dem vorhergehenden Anspruch, **dadurch gekennzeichnet, dass**:
- die erste Phase bei einem absoluten Druck von 350 mbar stattfindet, wobei die Ozonkonzentration 400 g/Nm³ und der Heizer inaktiv bleibt; und
- die zweite Phase bei einem absoluten Druck von 150 mbar stattfindet, wobei die Ozonkonzentration 150 g/Nm³ ist und der Heizer aktiviert ist, der das Ozon auf 67°C erwärmt.

15. Verfahren nach einem der Ansprüche 10 bis 14, **dadurch gekennzeichnet, dass** das getrocknete Blut, das den Trockner verlässt, durch eine Hammermühle verläuft.

## Revendications

1. Dispositif pour obtenir un produit déshydraté à partir de sang ou dérivés, **caractérisé en ce qu'**il comprend :
• un système d'évaporation sous vide à effets multiples (2), qui concentre le sang ;
• un séchoir sous vide (3) du sang concentré dans le système d'évaporateurs (2), **caractérisé en ce qu'**il comprend des plaques d'échange de chaleur verticales et des mécanismes agitateurs (3A3) qui augmentent la surface d'échange de chaleur ;
• un ozoniseur (4), qui injecte de l'ozone dans le séchoir (3) et exerce certains des effets du groupe consistant en une désodorisation, une aseptisation et une prévention de la coagulation ; et
dans lequel le système d'évaporateurs (2) et/ou le séchoir (3) utilisent les effluents résiduels d'une industrie en tant que source d'énergie.

2. Dispositif selon la revendication 1, **caractérisé en ce qu'**il comprend :
• un premier condenseur (8) à travers lequel circulent les gaz qui quittent le système d'évaporateurs (2) ; et
• un deuxième condenseur (9) à travers lequel circulent les gaz qui quittent le séchoir (3).

3. Dispositif selon la revendication 2, **caractérisé en ce que** le fluide froid du premier condenseur (8) et/ou du deuxième condenseur (9) est l'eau provenant du réseau pour une industrie.

4. Dispositif selon l'une quelconque des revendications précédentes, **caractérisé en ce que** l'énergie des effluents résiduels est utilisée au moyen d'une pompe à chaleur.

5. Dispositif selon l'une quelconque des revendications précédentes, **caractérisé en ce que** les mécanismes agitateurs (3A3) sont faits en aluminium ou en un alliage d'aluminium.

6. Dispositif selon la revendication 5, **caractérisé en ce que** les mécanismes d'agitation (3A3) sont faits en un alliage d'aluminium composé de 13,5 % de silicium, 4 % de manganèse et 3 % de nickel.

7. Dispositif selon l'une quelconque des revendications précédentes, **caractérisé en ce qu'**un élément chauffant (5) est interposé entre l'ozoniseur (4) et le séchoir (3).

8. Dispositif selon la revendication 7, **caractérisé en ce que** les gaz qui quittent le séchoir (3) traversent un destructeur d'ozone (6).

9. Dispositif selon l'une quelconque des revendications précédentes, **caractérisé en ce qu'**un broyeur à marteaux (7) est introduit à la sortie du séchoir (3) à travers lequel le sang séché passe.

10. Méthode pour obtenir un produit déshydraté à partir de sang ou dérivés, **caractérisé en ce qu'**elle comprend les étapes suivantes :
• injection de sang dans un système d'évaporateurs à effets multiples, où il est concentré ;
• injection du sang concentré qui quitte le système d'évaporateurs dans un séchoir avec des plaques verticales ;
• agitation en continu du sang dans le séchoir, au moyen de mécanismes agitateurs, qui éliminent le tartre et étendent la surface d'échange ;
• injection d'ozone à l'intérieur du séchoir ; et
• injection d'énergie dans le système d'évaporateurs et/ou le séchoir au moyen d'effluents résiduels provenant d'une industrie.

11. Méthode selon la revendication précédente, **caractérisée en ce que** les effluents résiduels circulent au moyen d'une pompe à chaleur.

12. Méthode selon la revendication 10 ou 11, **caractérisée en ce que** l'eau provenant du réseau consommée par une industrie circule en tant que fluide froid qui condense les vapeurs qui quittent le système d'évaporateurs et/ou le séchoir.

13. Méthode selon l'une quelconque des revendications 10 à 12, **caractérisée en ce que** le séchage du sang à l'intérieur du séchoir est effectué en deux phases :
• une première phase dans des conditions données de pression, de température d'ozone et de concentration d'ozone ; et
• une deuxième phase après la première, dans des conditions de pression, de température d'ozone et de concentration d'ozone différentes de celles correspondant à la première phase.

14. Méthode selon la revendication précédente, **caractérisée en ce que** :
• la première phase se déroule sous une pression absolue de 350 mbar, la concentration d'ozone est de 400 g/Nm³ et l'élément chauffant reste inactif ; et
• la deuxième phase se déroule sous une pression absolue de 150 mbar, la concentration d'ozone est de 150 g/Nm³ et l'élément chauffant est activé, en chauffant l'ozone à 67°C.

15. Méthode selon l'une quelconque des revendications 10 à 14, **caractérisée en ce que** le sang séché qui quitte le séchoir passe à travers un broyeur à marteaux.
